# EUROPEAN PATENT APPLICATION

(11) **EP 4 379 550 A1**
(43) Date of publication of application: **05.06.2024**
(21) Application number: 22211069.4
(22) Date of filing: 02.12.2022
(51) Int. Cl.: G06F 9/50, G06F 9/52, G06F 9/48

(54) **METHOD TO EXECUTE FUNCTIONS ON HARDWARE ACCELERATORS IN HETEROGENEOUS AUTOMOTIVE SYSTEMS WITH GUARANTEED FREEDOM FROM INTERFERENCE**

(71) Applicant: TTTech Auto AG, 1040 Wien (AT)
(72) Inventor: Cassadevall Saiz, Arnau, Barcelona (ES); Serna Oliver, Ramon, 1100 Wien (AT)
(74) Representative: Patentanwaltskanzlei Matschnig & Forsthuber OG

(57) **Abstract**

The invention relates to a method and computer system to execute functions in an automotive computer system, wherein a function comprises software components as well as computation kernels, "kernels", wherein the computer system comprises (a) computation core(s) and hardware accelerator devices, wherein each core is configured to execute software components, and wherein each accelerator is configured to execute kernels, each kernel is compatible with one or more accelerators, and a kernel can only be executed on a compatible accelerator, the software components are configured to request, when they are running on a core, the execution of one or more kernels. The computer system comprises a hardware accelerator manager component, "HWA". The HWA enqueues each kernel in one queue of an accelerator, which accelerator is compatible to the kernel, and sorts the kernels within their queues, wherein the HWA enqueues and sorts the kernels according to defined criteria. The HWA receives requests from running software components to execute specific kernels and triggers the execution of requested kernels on their accelerators. The requested kernels are executed on their accelerators taking into account the queues and their sorting order within their queues. The HWA has exclusive control of the accelerators and ensures that a kernel is only executing on its accelerator if no other kernel accelerator is executing simultaneously.

## Description

The invention relates to a method to execute functions, in particular automotive functions, in a computer system, for example in a - in particular heterogeneous - automotive computer system, wherein a function comprises software components as well as computation kernels, "kernels", and wherein the computer system comprises at least one computation core, "core", and one or more hardware accelerator devices, "accelerator",
wherein
- each core is configured to execute software components, and wherein
- each accelerator is configured to execute kernels,
- each kernel is compatible with one or more accelerators, and a kernel can only be executed on a compatible accelerator,
- the software components are configured to request, when they are running on a core, the execution of one or more kernels.

Furthermore, the invention relates to a computer system, for example a - in particular heterogeneous - automotive computer system, to execute functions, in particular automotive functions, wherein a function comprises software components as well as computation kernels, "kernels", and wherein the computer system comprises, for executing a method described above, at least one computation core, "core", and one or more hardware accelerator devices, "accelerator", wherein
- each core is configured to execute software components, and wherein
- each accelerator is configured to execute kernels,
- each kernel is compatible with one or more accelerators, and a kernel can only be executed on a compatible accelerator,
- the software components are configured to request, when they are running on a core, the execution of one or more kernels.

Modern ADAS ("Advanced Driver Assistance Systems") require advance algorithms often supported by dedicated hardware accelerator devices. The use of these hardware accelerators by software components running on generic CPU cores can be a blocking point when multiple such software components require support from the same accelerator, resulting in contention and/or unwanted interference. This can lead to software components missing their target deadlines, resulting in software malfunctions.

Access to accelerators is typically handled via software frameworks (e.g. libraries, drivers, software engines, etc...). Some of these frameworks like CUDA are particular to an accelerator vendor (i.e. Nvidia), others like OpenCL support accelerators from a variety of vendors. Either way, certain accelerators, like DLA engines, require higher level software frameworks, like TensorRT. These frameworks are designed and often optimized for performance without safety- critical considerations like freedom from interference.

It is an objective of the invention to provide a method and a computer system which guarantees freedom from interference between kernels and/or software components using kernels.

To achieve this objective a method with the features of claim 1 is provided, wherein the computer system comprises a hardware accelerator manager component, "HWA", wherein said HWA is configured to manage requests to execute kernels on the accelerators of said computer system, wherein for each accelerator at least one queue is provided, and wherein
- the HWA enqueues each kernel in one queue of an accelerator, which accelerator is compatible to the kernel, and
- wherein the HWA sorts the kernels within their queues,
wherein the HWA enqueues and sorts the kernels according to defined criteria, and wherein the HWA receives, at runtime of the computer system, requests from running software components to execute specific kernels ("requested kernel"), and wherein the HWA triggers the execution of requested kernels on their accelerators, wherein the requested kernels are executed on their accelerators taking into account the queues and their sorting order within their queues, and wherein the HWA has exclusive control of the accelerators, and wherein the HWA ensures that a kernel is only executing on its accelerator if no other kernel accelerator is executing simultaneously.

The objective is further achieved with a computer system as mentioned above, wherein the computer system comprises a hardware accelerator manager component, "HWA", wherein said HWA is configured to manage requests to execute kernels on the accelerators of said computer system, wherein for each accelerator at least one queue is provided, wherein
- the HWA is configured to enqueue each kernel in one queue of an accelerator, which accelerator is compatible to the kernel, and
- wherein the HWA is configured to sort the kernels within their queues,
wherein the HWA enqueues and sorts the kernels according to defined criteria, and wherein the HWA is configured to receive, at runtime of the computer system, requests from running software components to execute specific kernels ("requested kernel"), and wherein the HWA is configured to trigger the execution of requested kernels on their accelerators, wherein the requested kernels are executed on their accelerators taking into account the queues and their sorting order within their queues, and wherein the HWA has exclusive control of the accelerators, and wherein the HWA is configured to ensure that a kernel is only executing on its accelerator if no other kernel accelerator is executing simultaneously.

It should be noted that expressions such as "... *in one queue of an accelerator* ..." do not necessarily mean that the queue is located "in" the accelerator. Typically, the queue is related to said accelerator, but not located in the accelerator. Preferably, the queue(s) is/are located in the HWA, in particular in a memory region of the HWA.

The term *"HWA has exclusive control of the accelerators"* in particular has the meaning that no other software or hardware can handle accelerator requests.

A host in the context of the present text is for example an ECU, or in general, a module containing a variety of processing units (CPU, GPU, etc...), memory, buses, etc.

Regarding the most relevant terms used in the present text:
- "Dispatch" or "launch" a kernel is the action of triggering the execution of the kernel in the hardware accelerator;
- "Execute" or "run" is when the instructions of a kernel or a software component are being processed, for example by an accelerator (kernel) or a CPU (software); i.e. the code of the kernel/software is executed;
- "Enqueue" is the action of handling a kernel request and placing the kernel into a queue from which it will be later taken and launched;
- "Sort" refers to the way in which the kernel is enqueued. E.g., a kernel can be enqueued at the end of a queue (last) or at the front (first), or anywhere in between other kernels.
- "Synchronization points" refers to a mechanism by which hardware accelerators can halt the execution of a kernel until an external event occurs, for example a signal sent from a software component. A synchronization point may be exercised by a kernel by means of a synchronization instruction, for example wait_for_signal(signal).

According to the invention, freedom from interference (FFI) between software components using kernels, which are launched to the same accelerators, can be achieved by using a HWA which launches the kernels in a way that it is not possible that two or more kernels, in particular two or more kernels requested by different software components, are executing simultaneously in the same accelerator. While a kernel is executed on an accelerator, no other kernel is executed on said accelerator until the kernel in execution finishes its execution, or its execution is halted with explicit instructions, like synchronization points.

The HWA guarantees FFI between kernels, which allows to preserve FFI for the software components (using kernels).

The HWA launches kernel requests from different software components, which are directed to the same accelerator, only when either said accelerator is idle, or the execution of other kernels in said accelerator is halted. This ensures freedom from interference by ensuring kernel requests from different software components to the same accelerator are dispatched exclusively.

Usually, for example when using off-the-shelf hardware accelerator mechanisms (e.g., NVIDIA drivers), the execution of kernels may be handled based on performance criteria, which often imply the parallel execution of kernels within one accelerator. However, the effects in terms of interference (for example execution delays of one kernel due to the concurrent execution of another one) are not predictable. The HWA avoids this by launching kernels one by one, based on a defined order (like a defined priority or other criteria inherited from the requesting software component, like its deadline).

This technical feature may be complemented by the fact that the HWA offers the software components a unified method to request kernels, agnostic of the hardware/driver APIs. In other words, it may abstract the (often proprietary) libraries/ drivers to access the hardware accelerators and allows a system developer writing the software component to use the HWA API to request the launch of kernels without needing to adapt to the kernel native implementation (e.g. whether the kernel is implemented in CUDA, OPENCL, VULKAN, etc...). It may be necessary that he kernel itself needs to be coded in the respective native API (CUDA, OPENCL, et...) but the software component is not bound to those APIs. Hence a separation between the kernel implementation (which remains as before the invention) and the kernel request instructions in the software component code, which uses the HWA API instead of native APIs, may be provided.

The HWA may be a central component in the sense that there is one single HWA component for each host, regardless of how many accelerators are provided. By managing the accelerators with said one and only HWA, there is no other component that can interfere by bypassing the HWA control, allowing to achieve freedom from interference (FFI).

According to the invention, the HWA ensures that a kernel is executed by an accelerator "in isolation" and that it is not interfered by the execution of other kernels executing before or after in the same accelerator. If a kernel would be executed concurrently (in parallel) with other kernels in the same accelerator, it may suffer interferences which are not predictable. For example, kernel 1 would take 10ms in average to finish, and kernel 2 would takes 10ms in average to finish. If both kernels are executed concurrently by the same accelerator they share the accelerator capacity, so they should take roughly 20ms in average (e.g., if each would use "half" of the accelerator). However, in real world, in particular due to the internal architecture of accelerators, both kernels would need more time to finish execution when executed in parallel. This interference occurring is not predictable since it depends on the execution pipeline of the accelerators, memory transfers, and other hardware specific details.

Some kernels, usually depending on the hardware architecture and the kernel code, do not utilize the whole accelerator completely when executing, therefore some other kernel could in principle run in the "non utilized" part of the accelerator. However, the execution of kernels can require a varying utilization of the accelerator, e.g., image processing or object detection depends on the input image being analyzed.

Common accelerator mechanisms utilize the hardware as much as possible, and it is a desired feature to keep the accelerator permanently as busy as possible, which means they tend to execute concurrently as many kernels as possible. This is beneficial for general purpose applications (computer graphics, games, etc.) but disadvantageous for real-time systems which need time predictability.

According to the present invention the HWA increases predictability, even though that means sometimes the accelerator is underutilized.

The arbitration and prioritization of kernels executed by the accelerators allows the software components to respect their timeliness in a deterministic and guaranteed fashion and maintain, when needed, freedom from interference.

Preferred implementations of the computer system and the method are described in the dependent claims and are described in the following, wherein the features described in the following refer both to the method and the computer system.

It may be provided that the HWA, after receiving a request to execute a kernel, launches said kernel before its execution to the kernel.

Optionally, or additionally it may be provided that the HWA launches kernels to its accelerators, before said kernels have been requested by a software component.

It may be provided that the HWA enqueues the requested kernels in a queue and sorts the kernels within its queue according to one or more defined criteria.

Said defined criteria preferably may comprise
- a priority of each requested kernel, and/or
- the status of the accelerators, in particular, if an accelerator is busy or idle, and/or
- which kernels are already assigned to an accelerator, and/or
- the number of requests enqueued in the accelerator queue(s).

There may be more than one queue per accelerator, accordingly, criteria may be provided for the HWA to decide which queue to use (for example, based on priorities) and how to sort the requests within the queue (for example, based on a defined deadline of the requested kernels, sorting the kernels by the earliest deadline first).

The priority of a requested kernel may be directly inherited from the priority of the requesting software component.

The criterion "which kernels are already assigned to an accelerator" may refer to whether other kernels, of a group of kernels, have already been "assigned" to one of the accelerators. Some processing, for example, object detection, may require several kernels to work in sequence (e.g. image scaling, edge detection, object detection, object classification, output rendering, etc...). For this to be efficient it is preferable that the whole group of kernels is assigned to the same accelerator to minimize (or avoid) the transfer of data between different accelerators.

Regarding the criterion whether an accelerator is busy/idle, a requested kernel may, according to this criterion, be enqueued in a queue of the first accelerator being idle, or regarding the criterion "number of requests enqueued in the accelerator queue(s)" may be enqueued in a queue of an accelerator with the smallest number of enqueued requests.

It may be provided that for each of the kernels a kernel descriptor is provided, wherein a kernel descriptor comprises the following information:
- a unique identifier, the so-called "kernel ID", for example a unique numerical value, and for example
- a reference to the kernel code, for example a CUDA object.

A kernel request does not comprise the kernel itself, but the request has to clearly identify which kernel it is requesting. The above information may be used for this purpose. Regarding the kernel code, a kernel request will result in the HWA launching the kernel to one accelerator, which ultimately means the kernel code will be executed by the accelerator.

A specific software (component) usually cannot make use of all kernels present on the host, but only of a specific set of kernels. A software knows about its own kernels but not about the others. A kernel is another set of instructions (just that it is not CPU instructions but accelerator instructions). The kernel can be regarded as an additional function of the software component, encoded in different instructions to run on an accelerator. As with the CPU instructions, a software component is not aware of the instructions of other software components (and should not be).

The HWA may decide dynamically during runtime to launch a requested kernel on one accelerator from a set of compatible accelerators. However, this choice may be restricted by configuration depending on the software needs, so that the request is launched on a particular accelerator (which needs to be compatible as well). For example, the software may require to use an accelerator which is either more powerful, or physically "closer" to the core (less overhead to transfer data), etc... The decision of which accelerators are compatible is done at design time and defined as configuration. Therefore, a software component cannot decide during runtime which of the compatible accelerators is to be used, but a system architect could decide during design time (via configuration) that the requests from a specific software component should all be executed on a defined compatible accelerator, or on a defined subset of compatible accelerators, or anyone of the compatible accelerators.

It may be provided that an accelerator to launch a kernel is selected as follows:
- the HWA decides, at runtime, on which accelerator said requested kernel has to be launched, for example based on the defined criteria as described above, or
- the HWA, at runtime, executes a search over accelerators, in particular over a set of compatible accelerators, wherein said search may take into account criteria like
   o selecting an idle accelerator among the set of accelerators that are compatible with the kernel (e.g. an arbitrary idle CPU among all available GPUs in the system),
   o selecting the least energy consuming accelerator among the set of compatible accelerators,
   o selecting an accelerator among a set of accelerators that are compatible with the kernel, whereby using said accelerator may result in the lowest overall energy consumption for the entire computer system, for example, by selecting an accelerator which is already powered on instead of one which is in sleep mode,
- an accelerator is a priori defined, in particular at design time ("offline"), for example by a user, on which accelerator a requested kernel has to be launched.

The HWA has the information about the kernel but the kernel itself may physically be stored in a memory of the accelerator. Usually, in the normal case the HWA pre-loads the kernels into accelerator memory, where they kernels remain "ready to execute".

The HWA typically is implemented as software, which is executed on the host, in particular on one core of the computer system. The accelerators are realized as hardware components. Hosts may include safety hosts and performance hosts, while accelerator may include GPUs, AI Engines, etc.

It may be provided that the HWA
- monitors the execution of kernels, in particular with respect to a WCET of a kernel or a defined time-budget for the execution of a kernel, wherein the WCET or the defined time-budget may be included in a kernel descriptor, and/or
- adds a callback at the end of the kernels, wherein said callbacks can be configured to inform defined software components, or the HWA itself, about the termination of the execution of said kernels.

The worst-case execution time ("WCET") of a kernel may neither be known nor computable. Due to the complexity of some algorithms typically executed on hardware accelerators (e.g. machine learning, AI, etc...) and the execution dependency on the data they receive as input, it may not be possible to estimate in advance how long it will take "in the worst case" to execute a kernel. Therefore, in some cases instead of a WCET the kernels may include a "time budget", which may be equal, lower, or greater to the WCET, and determines the amount of guaranteed accelerator time the kernel may require. In this case, a monitor feature may be employed to notify if the requested time budget has been exceeded, and it may be possible to detect and/or to handle unexpected runtime behaviors.

A callback is a technicality that can be used to detect the end of a kernel execution. A software function is defined, which will be called (executed) at the end of the kernel execution. This is done by appending instructions at the end of the kernel code to execute said software function. Said software function, which is called a "call back" can be used to inform the HWA that the kernel execution has finished, so that, for example, the following kernel can be launched (if there is one waiting in the queue).

It may be provided that the HWA handles the transfer of input and output data to and from the accelerator memory and SWC memory. In some cases, input data must be transferred to the accelerator memory before a kernel execution begins. In other cases, the results produced by the execution of a first kernel on a hardware accelerator may be used as input by a second kernel executing on the same accelerator, without requiring additional transfers of input data. In some other cases, the execution of a kernel may produce results that need to be transferred to a SWC, for example, the SWC requesting the execution of said kernel.

It may be provided that the HWA handles the transfer of input data between the SWC and accelerator prior to the execution of a kernel, for example preceding the launching the said kernel, or upon the SWC request to launch said kernel.

It may be provided that the HWA handles the transfer of results between the accelerator and SWC, in particular by performing memory transfers between the memory containing the kernel results and the memory assigned, or accessible, to the SWC. It may be also provided that the SWC uses said "call back" functions to request the HWA the transfer of kernel results.

It may be provided that the HWA performs safety checks before launching a requested kernel on an accelerator, wherein said safety checks may include one or more of the following checks:
i. checking if a request was planned or not (e.g. whether the kernel request is conforming to the HWA configuration);
ii. checking if requests arrive with a higher or lower frequency than defined in the configuration;
iii. checking whether no other kernel, requested by the same or by a different software component, is executing before launching a new one;
iv. checking diagnosis registers, or other available metrics, from the hardware accelerators (for example, whether the accelerator is operating under normal conditions, including the absence of runtime errors, temperature ranges, and/or other hardware health indications provided by the accelerator).

Regarding item i., it is checked whether a request of a kernel that is going to be launched truly corresponds to a kernel which according to a configuration was defined, and, for example, if the kernel is queued at the right queue of a valid accelerator. In case that the request was not planned, or it is misplaced in the wrong queue, it is rejected. This is to detect and avoid faulty launches due to either runtime errors, malicious software manipulating queues, corrupted queues, etc.

Regarding item ii., requests arriving with a higher or lower frequency than defined (for requests defined as periodic) may be delayed (in case of higher frequency) or rejected. In particular, higher frequency may be problematic since this may saturate an accelerator and hence propagate to other components which are left without accelerator time to run their kernels.

Regarding item iii., it may for example be checked whether dependent kernels have been already launched and finished execution (for example, in the case of an object detection algorithm, an image may need to pass several sequential stages of processing, like scaling, inference, object classification, etc., each executed by a different kernel), to ensure that the predecessor kernels have finished execution before launching the next one, regardless of this being in the same accelerator or requested by the same software component.

Regarding item iv., it may for example be checked whether the accelerator hardware operates within normal ranges for diagnosis metrics like temperature, voltage, power consumption, or any other available indicator evaluating the healthy state of the hardware component.

It may be provided that the HWA is a software process running on a user-space service, which software process is configured as a means for communication between the software components and the accelerators.

An operating system typically runs software components in one of two possible levels: user- or kernel-space. This relates to memory protection, wherein user-space allows "normal" memory operations while kernel-space is a privileged mode allowing low level interaction with hardware and internals of the operating system. Important to note in this context: here, "kernel" refers to the operating system kernel, and not to the accelerator kernels. Kernel-space is where the operating system code runs, as well as some critical parts of drivers for hardware components, etc. User-space is where most applications run, using operating system calls to make use of hardware components (via dedicated drivers or using operating system primitives).

Since user-space applications do not handle hardware components directly (i.e. they use drivers/OS calls) they are coded with a higher abstraction and allow easier portability.

In some cases, it may be beneficial that the HWA is implemented as a kernel service to provide direct access to the low-level accelerator interfaces. This may be beneficial for bare-metal embedded systems or those with a lightweight runtime system, but may jeopardize portability as well as the abstraction of the vendor drivers for the hardware accelerators.

The applications (software components) may use the API ("Application Programming Interface") of the HWA to communicate with the accelerators, wherein the HWA may use a variety of software frameworks (e.g. libraries, drivers, software engines, etc...) to manage the accelerators, including, for example, CUDA, OpenCL, TensorRT, or VULKAN.

The integration of the HWA to the computer system, in particular the automotive computer system may be realized in different forms, depending for example on the availability of system resources and/or implicit or explicit system requirements.

The HWA may be integrated in the following ways:
(1) HWA is continuously running on a dedicated (exclusive) core of the computer system with dedicated resources;
(2) HWA is being activated after a software component sends/triggers a kernel request;
(3) HWA is being activated periodically at defined intervals (e.g., managed and scheduled by a middleware, or according to statically assigned intervals).

In cases (1), (2), and (3) a "host" core is needed where the HWA can run. The difference between (1) and (2)/(3) is that in case (1) the HWA has an entire core for itself and it is always executing. Accordingly, it will be able to react quickly to any software component request. In case (2) and (3) the HWA may be executed in a core shared with other software components. In (2), the execution of the HWA is triggered by an event (another software component executes a kernel request), while in (3) the HWA is periodically scheduled to execute. In (2) and (3) a latency may be present due to the time it takes between the request is done and the HWA is active and ready to process the request, while in (1) the HWA is always active and ready, at the cost of fully utilizing a whole CPU core.

It may be provided that kernels, in particular all kernels, each comprise a synchronization point, which for example is implemented in the code of the kernel, in particular implemented as the first instruction in the kernel code, so that a kernel may already be launched before it is requested and executing until said synchronization point is reached, at which synchronization point the execution is halted, and wherein said kernel resumes execution when a condition for said synchronization point is fulfilled, for example the reception of a defined signal.

To be more precise, this means that the kernel executes normally, until and including the instruction corresponding to the synchronization point, whereby the kernel halts its execution until a defined condition for the synchronization point is reached/ triggered, and then resumes execution. The kernel may be instrumented with a synchronization point as its first instruction, which essentially halts its execution until the defined condition for said synchronization point is satisfied.

Accordingly, a kernel instrumented with a synchronization point as its first instruction in the kernel code may be launched ahead of its intended request time. Such a synchronization point is indeed a "barrier" acting as a "rendezvous" between the kernel and any other component, for example the HWA, signalizing the defined condition, and whereby once said condition is signalized, the barrier is overcome and the execution of said kernel resumes. Hence, by instrumenting kernels with such barriers, multiple kernels can be effectively launched ahead of their intended request time (for example, at system initialization time) though they will remain latent until the conditions necessary to each barrier is signalized. This allows reducing the latency involved in the launching process of a kernel since it is already "pre-launched" in the accelerator and ready for execution (it has indeed already begun execution, but only until the barrier).

According to this aspect of the invention, it may be provided that the (in particular all) kernels are modified to begin their execution to wait for said synchronization point (barrier) and launched ahead of time, for example at the beginning of an execution cycle, and wherein the HWA makes use of the conditions signalizing said synchronization points to resume the kernel execution (i.e. fulfilling the condition (for example sending the signal) of the synchronization point corresponding to a kernel at the time said kernel must be launched, in particular when it is requested by a software component).

It may be provided that a kernel descriptor comprises one or more of the following information:
- parameters that can affect the timing scheduling, such as WCET of the kernels, average computation time, earliest execution time, or deadlines, and/or
- parameters related to how the kernel will be executed on an accelerator, e.g., a number of work-threads of the accelerator, number of streams/queues of the accelerator,
and wherein the launching of kernel requests is performed according to one or more of defined policies, taking said additional information into account, wherein said one or more of the following policies are:
- Time-Triggered (TT) policy: each request defines a time for its dispatching, wherein the dispatch order and instant are defined offline, for example by defining a time-table comprising the dispatching instant of each kernel;
- Earliest Deadline First (EDF) policy: each request defines a deadline, wherein the dispatch order and instant are decided at runtime, whereby kernels with an earliest deadline are dispatched earlier;
- Fixed-Priority (FP) policy: each request defines a static priority, wherein the dispatch order and instant are decided at runtime, whereby kernels with a higher priority are dispatched earlier;
- First-In-First-Out (FIFO) policy: dispatch order is decided at runtime based on the arrival time of a request.

"WCET" refers to the worst case execution time of a kernel. "Time-budget" refers to a time interval requested for the execution of a kernel on a defined accelerator. Average computation time relates to a time-budget as well, in particular the amount of time it takes to execute a kernel on average on a defined accelerator, wherein the execution time of a kernel can typically fluctuate depending on the input data it processes. The average computation time is an alternative time-budget when the WCET cannot be computed, for example due to the complexity of the kernel code.

Earliest execution time relates to a time milestone determining the earliest time at which the kernel should execute. This is, for example, if the kernel has dependencies to a time-triggered schedule, or any other event which will only be available after that milestone. Therefore, the kernel shall not execute before, or some dependency will be missing.

"Deadline" relates to a time milestone by which the kernel shall finish its execution. Therefore, the deadline can be used to decide at which time the kernel shall be launched so that the remaining time until the deadline is sufficient to complete its execution.

It may be provided that, when or after a kernel finishes execution, the HWA is informed by the kernel's accelerator, for example by a completion notification, and wherein the HWA informs the SWC, which has requested said kernel, about the finalization of the execution of said kernel, for example via a callback.

In this case a SWC may react to the notification by any of the following actions:
- requesting the HWA for a memory transfer, in particular a memory transfer related to the results of the kernel execution, or
- requesting the HWA to launch a second kernel, for example a second kernel using as input the results of the first kernel, or
- trigger the execution of a SWC, which execution requires the results of said kernel, or
- mark, in a list of pending kernels, the execution of said kernel as completed, wherein the SWC realizes any of the above actions 1) - 3) when all kernels of said list of pending kernels are marked as completed.

### Brief description of the drawings

In the following, in order to further demonstrate the present invention, illustrative and non-restrictive embodiments are discussed, as shown in the drawings, which show:
- Fig. 1: a computer system according to the invention,
- Fig. 2a: an example of a sequence diagram, where software components are requesting the execution of kernels, wherein two software components are launching kernels directly to a hardware accelerator, without the presence of a HWA,
- Fig. 2b: an example analogous to Figure 2a, in the presence of the HWA,
- Fig. 3: a first example of an execution mode for the HWA,
- Fig. 4: a second example of an execution mode for the HWA,
- Fig. 5: a third example of an execution mode for the HWA, and
- Fig. 6: a fourth example of an execution mode for the HWA.

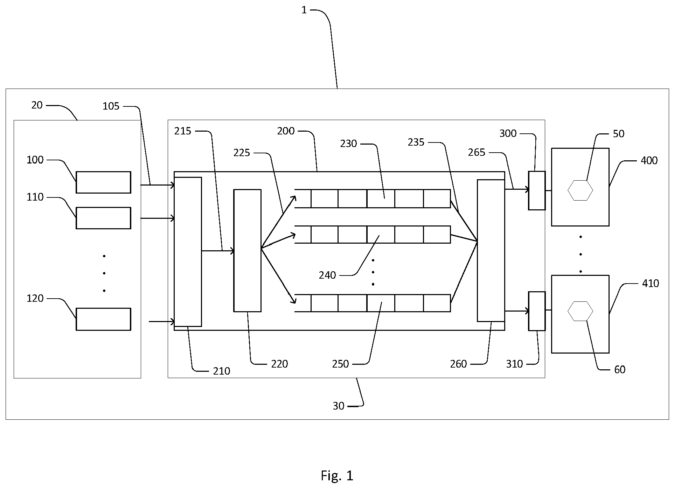

**Fig. 1** shows a computer system 1 according to the invention. For example, the computer system 1 comprises one or usually more computation cores 20, 30. For realizing a function, for example an automotive function, software components 100, 110, 120 are executed on one core 20 of the computer system 1. The cores 20, 30 may be part of one or more computer processors (CPU). Usually, different software components are executed on different cores, but may also be executed on the same cores. For example, in the case of an automotive system, the computer system 1 may comprises on or more ECU's ("Electronic Control Unit"), which each may comprise one or more computation cores, or the computer system is realized in the form of an ECU. A specific software is typically executed on the one or more computation cores of one (specific) ECU.

The computer system 1 further comprises a hardware accelerator Manager component 200, further denoted as "HWA", that executes in another core 30 of the computer system.

The software components 100, 110, 120 communicate kernel requests 105 to the HWA 200, by which kernel requests 105 a software component 100,110,120 requests the HWA 200 to execute a specific kernel.

The HWA 200 comprises an abstraction layer 210 by which the software components 100, 110, 120 communicate their kernel requests 105 to the HWA 200. Abstraction layer relates to a program interface API by which software components communicate with the HWA, for example to communicate kernel requests, which is independent of any specific API of the software layers used to communicate with the hardware accelerators, like accelerator drivers. By offering said abstraction layer, the HWA allows software components to request the execution of kernels and handle the communication with the accelerators without the need to utilize accelerator specific management software, for example library APIs like CUDA, or accelerator drivers.

The HWA 200 comprises means 220 so that it is configured/capable to process the kernel requests and to assign - denoted by 225 - the kernels 50, 60 to different queues 230, 240, 250, and to order the kernels 50, 60 within their respective queue 230, 240, 250 according to defined criteria as described in the introduction of the description.

The number of queues and the sorting policy within each queue are for example decided offline following defined criteria, whereby said decisions are composed as configuration defining the behaviour of the HWA 200.

The queues 230, 240, 250 typically are stored in the HWA 200, in particular in a memory of the HWA.

The kernels 50, 60 are launched/executed according to their sorting order within their queue and according to the launching/execution order of the queues.

Furthermore, the HWA 200 comprises a runtime kernel dispatcher 260 by which the HWA 200 launches (denoted by 265) kernels 50, 60 to the respective hardware accelerators 400, 410 (for example, a Graphics Processing Unit, "GPU" or an AI accelerator), for example by using their respective drivers or management software 300, 310.

The selection of a requested kernel to be launched among those kernels enqueued within all queues is, as mentioned above, based on defined criteria, for example on a priority order between the queues.

As already mentioned, the computer system 1 comprises means 300, 310, such as a management software or drivers (e.g., CUDA, OpenCL), for controlling the hardware accelerator components 400, 410. Said management software or driver execute on the computer system, similar to other software components, for example, in one of the cores 30.

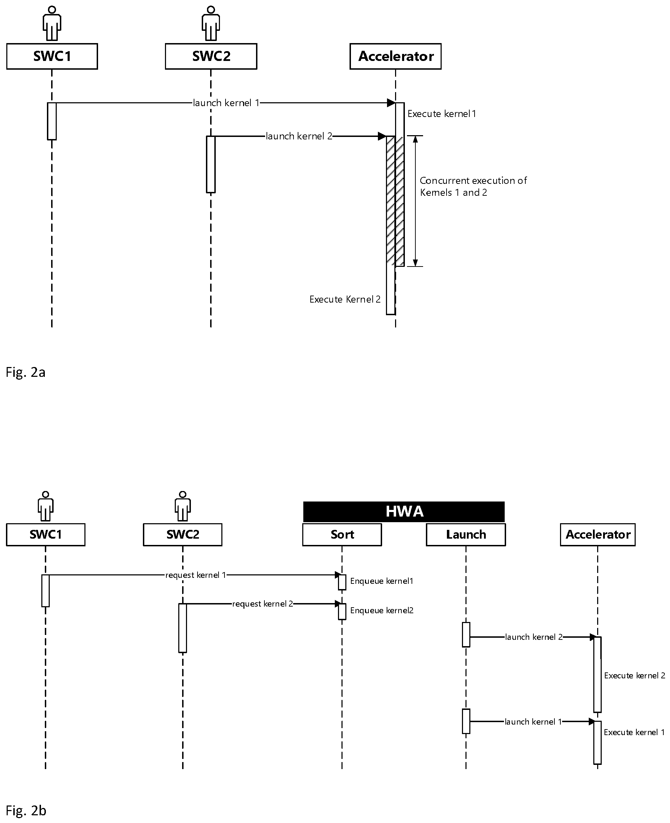

**Figure 2a** shows an example of a sequence diagram, wherein two software components SWC1, SWC2 are launching kernels, "Launch Kernel", directly to a hardware accelerator, without the presence of a HWA. In particular, the first software component SWC1 launches kernel 1, whereas the second software component SWC2 launches kernel 2.

A concurrent execution of kernels may occur in some accelerators designed to maximize their throughput and minimize the idle time of any of their internal subcomponents. This technique may improve the utilization of accelerator resources but also incurs a higher interference between concurrent kernels, leading, in some cases, to non-deterministic execution times. In the example shown, kernel 1 begins execution upon being launched by the first software component, SWC1. The second software component, SWC2, launches kernel 2 while kernel 1 is still executing in the accelerator, causing kernel 1 and kernel 2 to execute concurrently in the accelerator. During the interval in which both kernels, kernel 1 and kernel 2, execute concurrently there is no guarantee of Freedom-from-Interference, "FFI", between the two kernels, which may introduce non-deterministic delays caused by sharing the internal resources of the accelerator, whereby the execution runtime of one kernel may influence the execution runtime of the other.

**Figure 2b** shows an example analogous to Figure 2a in the presence of the HWA, wherein the software components SWC1 and SWC2 request the execution of kernels to the HWA. According to the invention, the HWA receives the kernel requests and enqueues each requested kernel in a queue of a hardware accelerator, which accelerator is compatible to the kernel, and wherein the HWA sorts the requested kernels within the queue in which said kernel has been enqueued according to defined criteria.

In the example shown, the first software component SWC1 has transmitted its kernel request to the HWA before the second software component SWC2. The requested kernels are enqueued and sorted, according to defined criteria assumed for this example, in a different order than the timely order of the kernel requests, so that the kernel requested by the second software component SWC2, kernel 2, is in the queue in front of the kernel requested by the first software component SWC1, kernel 1. Accordingly, kernel 2 requested by the second software component, SWC2, is launched earlier, to the hardware accelerator, and kernel 1, requested by the first software component, SWC1, is launched later. Kernel 1 and Kernel 2 are executed in the hardware accelerator with guaranteed FFI, and therefore, their execution behaviour, in particular, the execution time of any one kernel, is not dependent on nor influences the execution of any other kernels.

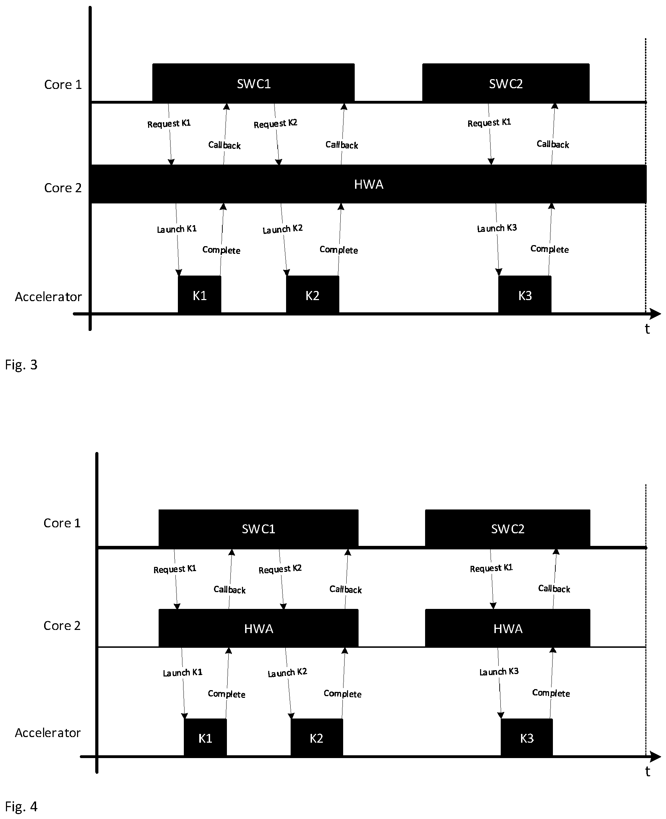

**Figures 3 - 6** depict examples with four possible execution modes for the HWA.

**Figures 3 - 5** show a computer system comprising two processing cores ("Core 1", "Core 2") and one hardware accelerator ("Accelerator").

Two software components ("SWC1", "SWC2") are executed on the processing core "Core 1". Furthermore, the HWA is executed on the processing core "Core 2".

**Figure 3** depicts an example showing software components SWC1 and SWC2 executing on core 1, while the HWA is continuously running (for example, as a free running application) on a dedicated core, Core 2.

Kernels K1, K2, and K3 are executed in the accelerator (for example a GPU) upon request by the respective software components. In particular, software component SWC1 requests execution of kernel K1 and kernel K2, software component SWC2 requests execution of kernel K3.

Software component SWC1 sends a kernel request of kernel K1, which is processed by the HWA causing kernel K1 to be launched for execution on the accelerator. Once kernel K1 finishes execution the HWA receives a completion notification and notifies SWC1 via a callback of the finalization of kernel K1. Following, software component SWC1 sends a request of a second kernel, K2, which is launched and executed in the accelerator. Upon completion, the HWA informs software component SWC1 via a dedicated callback. Analogously, software component SWC2 sends a request to launch kernel K3, which is processed by the HWA and kernel K3 is launched and executed in the accelerator. Analogously, the HWA informs software component SWC2 via a callback about the completion of the kernel K3.

Since the HWA is continuously active on a dedicated core Core 2, the kernel requests are handled by the HWA instantaneously, which allows an immediate handling of kernel requests (sorting, enqueuing, and launching). This solution requires a dedicated core for the HWA, which cannot be shared with any other software component. Furthermore, the HWA is running continuously, even though it is only needed at specific instants.

**Figure 4** depicts an example similar to the example of **Figure 3****.** In contrast to **Figure 3**, the HWA is executed during the time intervals when SWC1 and SWC2 are also executed, for example by aligning their schedule tables in a scheduled time-triggered system. The HWA is only scheduled when a software component that requires interaction with an accelerator is executing, in particular while a software component SWC1, SWC2, which requests kernel executions, is scheduled, leaving the remaining time in the core Core 2 free for other use.

Again, this implementation allows for immediate handling of requests and does not need a dedicated core required for HWA. In the intervals in which the HWA is not executing in its core Core 2, other software components could be executed in said core (not depicted in Figure 4).

However, the HWA still needs to be scheduled and running for the entire duration of a software component, even though the HWA is only needed at specific instants when a software component requests the launch/execution of a kernel.

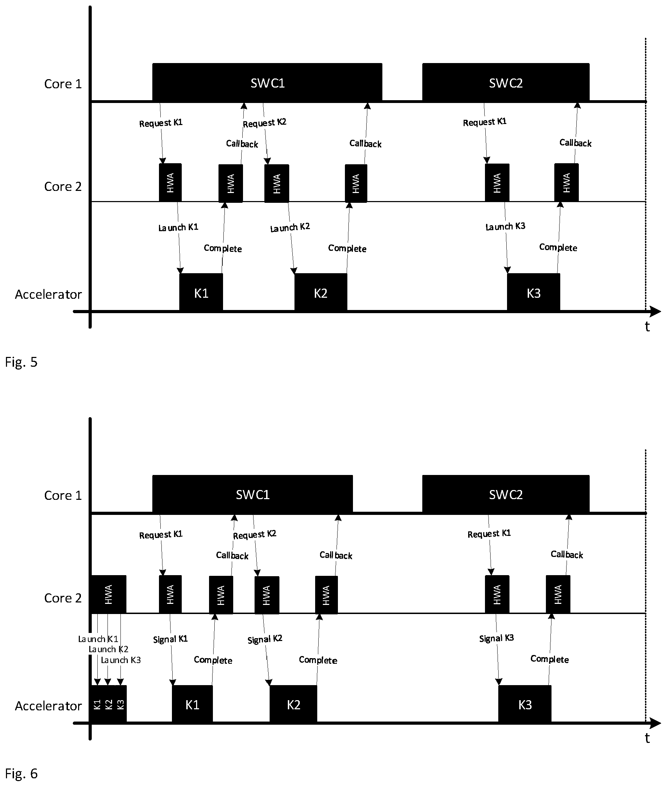

**Figure 5** **depicts** an example, in which the HWA is executed only at the instants of time when it is required by any software component, for example as a scheduled time-triggered tasks.

In this case, the HWA executes only when requests are expected (for example when either a software component request is due or when a kernel is expected to complete). This implementation provides the advantage of lower utilization of the CPU core in which the HWA is scheduled. An advantage of this execution mode is that core Core 2 has a much lower utilization by the HWA in comparison to the examples above. Therefore, other software components may utilize said processing core to a higher degree.

**Figure 6** depicts a similar example as **Figure 5** with the difference that kernels K1, K2, and K3 are launched ahead of the request by their respective software components. However, the execution of said kernels K1, K2, K3 is halted until the time when said software components send the respective requests, for example by implementing a barrier or a synchronization point, as the first instruction. The HWA then triggers the execution of each said kernel by means of signalizing the condition to fulfil said synchronization point, for example by generating a signal for the respective kernels.

By launching the kernels and halting execution ahead of the time they are requested by the respective software components, the actual delay between the kernel request and the beginning of execution of the kernel is significantly reduced.

## Claims

1. Method to execute functions, in particular automotive functions, in a computer system, for example in a - in particular heterogeneous - automotive computer system, wherein a function comprises software components as well as computation kernels, "kernels", and wherein the computer system comprises at least one computation core, "core", and one or more hardware accelerator devices, "accelerator",
wherein
- each core is configured to execute software components, and wherein
- each accelerator is configured to execute kernels,
- each kernel is compatible with one or more accelerators, and a kernel can only be executed on a compatible accelerator,
- the software components are configured to request, when they are running on a core, the execution of one or more kernels,
wherein the computer system comprises a hardware accelerator manager component, "HWA", wherein said HWA is configured to manage requests to execute kernels on the accelerators of said computer system,
wherein
for each accelerator at least one queue is provided, wherein
• the HWA enqueues each kernel in one queue of an accelerator, which accelerator is compatible to the kernel, and
• wherein the HWA sorts the kernels within their queues,
wherein the HWA enqueues and sorts the kernels according to defined criteria,
and wherein the HWA receives, at runtime of the computer system, requests from running software components to execute specific kernels ("requested kernel"),
and wherein the HWA triggers the execution of requested kernels on their accelerators,
wherein the requested kernels are executed on their accelerators taking into account the queues and their sorting order within their queues, and wherein
the HWA has exclusive control of the accelerators,
and wherein the HWA ensures that a kernel is only executing on its accelerator if no other kernel accelerator is executing simultaneously.

2. Method according to claim 1, wherein the HWA, after receiving a request to execute a kernel, launches said kernel to its accelerators before its execution.

3. Method according to claim 1 or 2, wherein the HWA launches kernels to its accelerators, before said kernels have been requested by a software component.

4. Method according to anyone of the preceding claims, wherein the HWA enqueues the requested kernels in a queue and sorts the kernels within its queue according to one or more defined criteria.

5. Method according to claim 4, wherein said defined criteria comprise
• a priority of each requested kernel, and/or
• the status of the accelerators, in particular if an accelerator is busy or idle, and/or
• which kernels are already assigned to an accelerator, and/or
• the number of requests enqueued in the accelerator queue(s).

6. Method according to anyone of the preceding claims, wherein an accelerator to launch a kernel is selected as follows:
• the HWA decides, at runtime, on which accelerator said requested kernel has to be launched, for example based on the defined criteria according to claim 3, or
• the HWA, at runtime, executes a search over accelerators, in particular over a set of compatible accelerators, wherein said search may take into account criteria like
o selecting an idle accelerator among the set of accelerators that are compatible with the kernel (e.g. an arbitrary idle GPU among all available GPUs in the system),
o selecting the least energy consuming accelerator among the set of compatible accelerators,
o selecting an accelerator among a set of accelerators that are compatible with the kernel, whereby using said accelerator may result in the lowest overall energy consumption for the entire computer system, for example, by selecting an accelerator which is already powered on instead of one which is in sleep mode,
• an accelerator is a priori defined, in particular at design time ("offline"), for example by a user, on which accelerator a requested kernel has to be launched.

7. Method according to anyone of the preceding claims, wherein the HWA
• monitors the execution of kernels, in particular with respect to a WCET of a kernel or a defined time-budget for the execution of a kernel, wherein the WCET or the defined time-budget may be included in a kernel descriptor, and/or
• adds a callback at the end of the kernels, wherein said callbacks can be configured to inform defined software components, or the HWA itself, about the termination of the execution of said kernels.

8. Method according to anyone of the preceding claims, wherein the HWA performs safety checks before launching a requested kernel on an accelerator, wherein said safety checks may include one or more of the following checks:
i. checking if a request was planned or not;
ii. checking if requests arrive with a higher or lower frequency than defined in the configuration;
iii. checking whether no other kernel, requested by the same or by a different software component, is executing before launching a new one;
iv. checking diagnosis registers, or other available metrics, from the hardware accelerators.

9. Method according to anyone of the preceding claims, wherein the HWA is a software process running on a user-space service, which software process is configured as a means for communication between the software components and the accelerators.

10. Method according to anyone of the preceding claims, wherein the HWA is integrated in the computer system in one of the following ways:
(1) HWA is continuously running on a dedicated (exclusive) host core with dedicated resources;
(2) HWA is being activated after a software component sends/triggers a kernel request;
(3) HWA is being activated periodically at defined intervals (e.g., managed and scheduled by a middleware, or according to statically assigned intervals).

11. Method according to anyone of the preceding claims, wherein kernels, in particular all kernels, each comprise a synchronization point, which for example is implemented in the code of the kernel, in particular implemented as the first instruction in the kernel code, so that a kernel may already be launched before it is requested and executing until said synchronization point is reached, at which synchronization point the execution is halted, and wherein said kernel resumes execution when a condition for said synchronization point is fulfilled, for example the reception of a defined signal.

12. Method according to anyone of the preceding claims, wherein kernel descriptors comprise one or more of the additional information:
• parameters that can affect the timing scheduling, such as WCET of the kernels, average computation time, earliest execution time, or deadlines, and/or
• parameters related to how the kernel will be executed on an accelerator, e.g. a number of work-threads of the accelerator, number of streams/queues of the accelerator,
and wherein the launching of kernel requests is performed according to one or more of defined policies, taking said additional information into account, wherein said one or more of the following policies are:
• Time-Triggered (TT) policy: each request defines a time for its dispatching, wherein the dispatch order and instant are defined offline;
• Earliest Deadline First (EDF) policy: each request defines a deadline, wherein the dispatch order and instant are decided at runtime, whereby kernels with an earliest deadline are dispatched earlier;
• Fixed-Priority (FP) policy: each request defines a static priority, wherein the dispatch order and instant are decided at runtime, whereby kernels with a higher priority are dispatched earlier;
• First-In-First-Out (FIFO) policy: dispatch order is decided at runtime based on the arrival time of a request.

13. Method according to anyone of the preceding claims, wherein when or after a kernel finishes execution, the HWA is informed by the kernel's accelerator, for example by a completion notification, and wherein the HWA informs the SWC, which has requested said kernel, about the finalization of the execution of said kernel, for example via a callback.

14. Method according to claim 13, wherein the SWC reacts to the notification by any of the following actions:
1. requesting the HWA for a memory transfer, in particular a memory transfer related to the results of the kernel execution, or
2. requesting the HWA to launch a second kernel, for example a second kernel using as input the results of the first kernel, or
3. trigger the execution of a SWC, which execution requires the results of said kernel, or
4. mark, in a list of pending kernels, the execution of said kernel as completed, wherein the SWC realizes any of the above actions 1) - 3) when all kernels of said list of pending kernels are marked as completed.

15. Computer system, for example a - in particular heterogeneous - automotive computer system, to execute functions, in particular automotive functions, wherein a function comprises software components as well as computation kernels, "kernels", and wherein the computer system comprises, for executing a method according to anyone of the claims 1 to 13, at least one computation core, "core", and one or more hardware accelerator devices, "accelerator", wherein
- each core is configured to execute software components, and wherein
- each accelerator is configured to execute kernels,
- each kernel is compatible with one or more accelerators, and a kernel can only be executed on a compatible accelerator,
- the software components are configured to request, when they are running on a core, the execution of one or more kernels,
wherein the computer system comprises a hardware accelerator manager component, "HWA", wherein said HWA is configured to manage requests to execute kernels on the accelerators of said computer system,
wherein
for each accelerator at least one queue is provided, wherein
• the HWA is configured to enqueue each kernel in one queue of an accelerator, which accelerator is compatible to the kernel, and
• wherein the HWA is configured to sort the kernels within their queues,
wherein the HWA enqueues and sorts the kernels according to defined criteria,
and wherein the HWA is configured to receive, at runtime of the computer system, requests from running software components to execute specific kernels ("requested kernel"),
and wherein the HWA is configured to trigger the execution of requested kernels on their accelerators,
wherein the requested kernels are executed on their accelerators taking into account the queues and their sorting order within their queues, and wherein
the HWA has exclusive control of the accelerators,
and wherein the HWA is configured to ensure that a kernel is only executing on its accelerator if no other kernel accelerator is executing simultaneously.
